# EUROPÄISCHE PATENTSCHRIFT

(11) **EP 3 847 725 B1**
(45) Veröffentlichungstag und Bekanntmachung des Hinweises auf die Patenterteilung: **20.07.2022**
(21) Anmeldenummer: 19761860.6
(22) Anmeldetag: 29.08.2019
(51) Int. Cl.: H01R 13/639, H01R 13/629, H01R 13/74, H01R 13/6596

(54) **ELEKTRISCHE STECKVERBINDUNG, FAHRZEUG UND VERFAHREN ZUM VERRIEGELN EINER ELEKTRISCHEN STECKVERBINDUNG**
ELECTRICAL PLUG-IN CONNECTION, VEHICLE AND METHOD FOR LOCKING AN ELECTRICAL PLUG-IN CONNECTION
CONNEXION ÉLECTRIQUE PAR INSERTION, VÉHICULE ET PROCÉDÉ DE VERROUILLAGE D'UNE CONNEXION ÉLECTRIQUE PAR INSERTION

(30) Priorität: 03.09.2018 DE 102018121397
(43) Veröffentlichungstag der Anmeldung: 14.07.2021
(73) Patentinhaber: ROSENBERGER HOCHFREQUENZTECHNIK GMBH & CO. KG, 83413 Fridolfing (DE)
(72) Erfinder: BLAKBORN, Willem, 83334 Inzell (DE)
(74) Vertreter: Lorenz, Markus
(86) Internationale Anmeldenummer: PCT/EP2019/073150
(87) Internationale Veröffentlichungsnummer: WO 2020/048872

(56) Entgegenhaltungen:
- EP-A1- 0 124 389
- GB-A- 2 270 805
- GB-A- 2 484 327

## Beschreibung

Die Erfindung betrifft eine elektrische Steckverbindung, umfassend einen Steckverbinder und einen mit dem Steckverbinder verbindbaren Gegensteckverbinder, gemäß dem Oberbegriff von Anspruch 1.

Die Erfindung betrifft ferner ein Fahrzeug, insbesondere ein Kraftfahrzeug, umfassend eine elektrische Steckverbindung.

Schließlich betrifft die Erfindung auch ein Verfahren zum Verriegeln einer aus einem Steckverbinder und einem Gegensteckverbinder bestehenden elektrischen Steckverbindung gemäß dem Oberbegriff von Anspruch 13.

Aus der Elektrotechnik sind eine Vielzahl an elektrischen Steckverbindern, insbesondere auch elektrische Stiftwannen, bekannt. Die elektrischen Steckverbinder dienen bekanntermaßen dazu, elektrische Energie und/oder Signale mit einer möglichst großen Bandbreite zu übertragen, insbesondere an korrespondierende Gegensteckverbinder zu übertragen.

Elektrische Steckverbinder weisen Kontakteinrichtungen in vielzähligen Ausführungsformen auf. Gängig sind insbesondere Pinkontakte und/oder Stiftkontakte. Unabhängig von der konkreten Bauart werden die verschiedenen Steckverbinder nachfolgend als elektrische Steckverbinder bezeichnet.

Bei einem elektrischen Steckverbinder bzw. einem elektrischen Gegensteckverbinder kann es sich um einen Stecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Insbesondere an Steckverbinder für die Kraftfahrzeugindustrie werden hohe Anforderungen hinsichtlich deren Robustheit und der Sicherheit der Steckverbindungen gestellt. So muss eine Steckverbindung mitunter hohen Belastungen, beispielsweise mechanischen Belastungen, standhalten, sowie definiert geschlossen bleiben. Es muss gewährleistet sein, dass die elektrische Verbindung nicht unbeabsichtigt, beispielsweise während des Betriebs eines Fahrzeugs, getrennt wird. Ferner müssen die Steckverbinder auch in verunreinigten, feuchten und/oder chemisch aggressiven Umgebungen eine einwandfreie Übertragung von elektrischer Leistung, Signalen und/oder Daten gewährleisten.

Insbesondere beim autonomen Betrieb von Fahrzeugen und für Assistenzsysteme ist die Gewährleistung der Sicherheit vorrangig.

Elektrische Steckverbinder bzw. deren Steckverbinderkörper können an einer elektrischen Leitung, einem Kabelbaum, einem Kabel oder einer elektrischen Einrichtung, wie z. B. einem Gehäuse eines elektronischen bzw. elektrischen Geräts verbaut sein.

Besondere Anforderungen an elektrische Steckverbinder werden insbesondere auch im Hochvoltbereich gestellt. Hochvoltsteckverbinder werden im Fahrzeugbereich, vor allem bei Elektro- und/oder Hybridfahrzeugen eingesetzt, um eine Hochspannungsbatterie mit Ladestrom zu versorgen oder die gespeicherte Energie aus der Batterie zu entnehmen. So werden beispielsweise für Hochvoltverbindungen geeignete Steckverbinder für Versorgungseinheiten, wie z. B. eine Ladebox in einer Garage oder einem Carport oder auch bei Stromtankstellen, eingesetzt, um eine Hochspannungsbatterie eines Fahrzeugs mit Ladestrom zu versorgen. Der elektrische Steckverbinder muss dabei dauerhaft und sicher ein Eindringen von Feuchtigkeit und Verunreinigungen verhindern und eine einwandfreie Übertragung des elektrischen Ladestroms und gegebenenfalls anderer elektrischer Signale für eine Steuerung des Ladevorgangs der Hochspannungsbatterie gewährleisten.

Der Einsatz von elektrischen Steckverbindern zum Übertragen einer vergleichsweise großen elektrischen Antriebsenergie (oder auch Bremsenergie) bei Elektro- und/oder Hybridfahrzeugen erfordert spezifisch gestaltete elektrische Hochvoltsteckverbinder. Es ist ferner zu berücksichtigen, dass durch Wechselströme und/oder Schaltflanken mit hohen Gleichspannungen elektromagnetische Störsignale generiert werden, die die Elektronik in einer elektronischen Steuerung, beispielsweise innerhalb eines Kraftfahrzeugs, stören können. Eine effiziente elektromagnetische Abschirmung, insbesondere der elektrischen Steckverbinder, die im Hochvoltbereich in Kraftfahrzeugen eingesetzt werden, ist daher von Vorteil, um eine Beeinträchtigung von Steuergeräten innerhalb des Fahrzeugs zu vermeiden. Es werden daher entsprechend hohe Anforderungen an die Abschirmung der elektrischen Steckverbinder gestellt.

Ferner ist zu beachten, dass elektrische Steckverbindungen für die Automobilindustrie bzw. für Fahrzeuge den während des Betriebs der Fahrzeuge auftretenden - mitunter hohen - Vibrationsbelastungen mechanisch und elektrisch sicher standhalten müssen.

Die EP 0 124 389 A1 betrifft eine elektrische Steckverbindung, umfassend einen Steckverbinder und einen korrespondierenden Gegensteckverbinder. Der Steckverbinder kann mittels eines Gewindes mit dem Gegensteckverbinder verbunden werden. Der Steckverbinder weist eine Verzahnung und der Gegensteckverbinder eine Gegenverzahnung auf, um die Steckverbindung in der Verriegelungsstellung zu sichern. Vergleichbare Steckverbindungen werden außerdem auch in der GB 2 270 805 A und in der GB 2 484 327 A beschrieben. Die Vibrationssicherheit derartiger Steckverbindungen kann gegenüber Steckverbindungen ohne Verzahnung verbessert sein. Es besteht allerdings nach wie vor ein Bedarf, die Vibrationssicherheit noch weiter zu erhöhen.

Der vorliegenden Erfindung liegt die Aufgabe zugrunde, die aus dem Stand der Technik bekannten elektrischen Steckverbindungen zu verbessern, insbesondere deren Vibrationssicherheit zu erhöhen.

Diese Aufgabe wird durch die Merkmale des Anspruchs 1 gelöst.

Der vorliegenden Erfindung liegt des Weiteren die Aufgabe zugrunde, ein Fahrzeug, insbesondere ein Kraftfahrzeug, zu schaffen, welches eine elektrische Steckverbindung aufweist, die insbesondere eine hohe Vibrationssicherheit aufweist.

Diese Aufgabe wird durch die Merkmale des Anspruchs 12 gelöst.

Der vorliegenden Erfindung liegt zudem die Aufgabe zugrunde, ein vorteilhaftes Verfahren zum Verriegeln einer aus einem Steckverbinder und einem Gegensteckverbinder bestehenden elektrischen Steckverbindung bereitzustellen, das insbesondere eine vibrationssichere Verriegelung der Steckverbindung gewährleistet.

Diese Aufgabe wird durch die Merkmale des Anspruchs 13 gelöst.

Die erfindungsgemäße elektrische Steckverbindung umfasst einen Steckverbinder und einen mit dem Steckverbinder verbindbaren Gegensteckverbinder. Der Gegensteckverbinder weist ein zwischen einer Grundposition und einer Verriegelungsposition bewegliches Betätigungselement auf, das ausgebildet ist, um mit einem Führungsmittel des Steckverbinders derart zusammenzuwirken, dass die Steckverbindung ausgehend von einer Vorraststellung eine Verriegelungsstellung einnimmt, wenn das Betätigungselement von der Grundposition in die Verriegelungsposition bewegt wird.

Die elektrische Steckverbindung ist insbesondere für die Leistungselektronik im Kraftfahrzeugbereich vorgesehen. Die Erfindung ist hierauf jedoch nicht beschränkt. Grundsätzlich kann die erfindungsgemäße Steckverbindung innerhalb der gesamten Elektrotechnik bzw. im gesamten Elektronikbereich vorteilhaft eingesetzt werden.

Bei der Vorraststellung handelt es sich vorzugsweise um eine Initialposition, ausgehend von der sich das Betätigungselement zur Verbindung des Steckverbinders mit dem Gegensteckverbinder von einem Benutzer oder einer Montagevorrichtung betätigen lässt.

Es kann vorgesehen sein, dass der Steckverbinder und der Gegensteckverbinder in der Vorraststellung bereits mechanisch miteinander verbunden sind, beispielsweise unverlierbar miteinander verbunden sind und/oder sich in einem Zustand befinden, in dem die elektrische Steckverbindung transportsicher ausgeliefert werden kann.

Wenn sich die elektrische Steckverbindung in der Verriegelungsstellung befindet, sind der Steckverbinder und der Gegensteckverbinder elektrisch und mechanisch funktional für die vorgesehene Verwendung zur Leistungs- und/oder Signalübertragung verbunden. Die mechanische Verbindung kann in dieser Position eine oder mehrere Verriegelungen bzw. Verrastungen aufweisen, um die elektrische Steckverbindung sicher in der Verriegelungsstellung zu halten.

Erfindungsgemäß ist vorgesehen, dass der Steckverbinder eine Verzahnung aufweist und der Gegensteckverbinder eine mit der Verzahnung des Steckverbinders korrespondierende Gegenverzahnung aufweist, wobei die Verzahnung und die Gegenverzahnung in der Verriegelungsstellung der Steckverbindung miteinander in Eingriff stehen.

Im Verlauf der Betätigung des Betätigungselements von der Grundposition in die Verriegelungsposition greift die Verzahnung somit in die korrespondierende Gegenverzahnung ein. Die Zähne der Verzahnungen werden somit in Steckrichtung axial ineinander geschoben, während das Betätigungselement betätigt wird.

Die Verzahnung bewirkt eine Verbesserung bzw. Optimierung bezüglich Vibrationsbelastungen der Steckverbindung. Die Verzahnung kann in radialer Richtung sowie in Kabelabgangsrichtung mechanische Kräfte aufnehmen und dadurch den Steckverbinder relativ zu dem Gegensteckverbinder stillhalten.

Aufgrund der erfindungsgemäß hohen Vibrationssicherheit der Steckverbindung eignet sich die erfindungsgemäße elektrische Steckverbindung zur Übertragung von elektrischen Datensignalen mit hoher Priorität und/oder zur Übertragung von elektrischen Versorgungssignalen mit Gefährdungspotential bzw. mit hohen Sicherheitsanforderungen (wie z. B. im Falle einer Hochvoltverbindung). Die erfindungsgemäße Steckverbindung eignet sich demnach besonders zum Einsatz in einem Fahrzeug, insbesondere einem Kraftfahrzeug.

In einer Weiterbildung der Erfindung kann vorgesehen sein, dass der Steckverbinder als Gerätesteckverbinder oder Stiftwanne ausgebildet ist.

Vorzugsweise handelt es sich bei dem elektrischen Steckverbinder um eine elektrische Stiftwanne. Elektrische Stiftwannen sind unter anderem im Kraftfahrzeugbereich bekannt.

In einer Weiterbildung der Erfindung kann außerdem vorgesehen sein, dass der Gegensteckverbinder als Kupplung oder Stecker ausgebildet ist.

Auf die Art des Steckverbinders bzw. Gegensteckverbinders kommt es erfindungsgemäß allerdings nicht an. Grundsätzlich können beliebige Arten von Steckverbindern und Gegensteckverbindern vorgesehen sein, die miteinander verbindbar sind.

Besonders eignet sich die Erfindung zur Ausbildung einer Verzahnung einer Stiftwanne zur Verbindung mit einer Gegenverzahnung eines Kupplers zur Ausbildung einer Steckverbindung im Hochvolt-Bereich. Besonders bevorzugt kann die elektrische Steckverbindung als zweipolige Flachkontaktsteckverbindung ausgebildet sein.

In einer Weiterbildung der Erfindung kann insbesondere vorgesehen sein, dass der Steckverbinder einen Steckverbinderkörper zur Aufnahme einer Kontakteinrichtung und eine Abschirmung aufweist, wobei der Steckverbinderkörper zum Einsetzen in eine Öffnung eines Gehäuseteils eines Gehäuses einer Elektronikeinheit ausgebildet ist. Der Steckverbinderkörper kann mehrteilig ausgebildet sein und wenigstens einen inneren Steckverbinderkörper und einen äußeren Steckverbinderkörper aufweisen, die auf gegenüberliegenden Seiten des Gehäuseteils positioniert sind, wobei der innere Steckverbinderkörper unabhängig von dem Gehäuseteil im Gehäuse der Elektronikeinheit festlegbar ist und wobei Befestigungsmittel vorgesehen sind, um die Steckverbinderkörper derart miteinander zu verbinden, dass das Gehäuseteil zwischen den Steckverbinderkörpern festgelegt ist.

Bei der Elektronikeinheit kann es sich vorzugsweise um eine Hochvoltelektronikeinheit, insbesondere eine Hochspannungsbatterie, handeln.

Es kann also vorgesehen sein, dass der innere Steckverbinderkörper des Steckverbinders zusätzlich zu einer Befestigung an dem Gehäuseteil noch an wenigstens einem weiteren Abschnitt des Gehäuses festgelegt ist.

Durch die beschriebene Weiterbildung lässt sich der Steckverbinderkörper des Steckverbinders einfach und zuverlässig mit dem Gehäuseteil des Gehäuses der Elektronikeinheit verbinden. Es wird somit in einfacher Weise eine definierte Positionierung des elektrischen Steckverbinderkörpers erreicht, derart dass der elektrische Gegensteckverbinder zuverlässig und sicher mit dem elektrischen Steckverbinder verbunden werden kann.

Die Befestigung des inneren Steckverbinderkörpers des Steckverbinders in dem Gehäuse kann in beliebiger Art und Weise, vorzugsweise durch eine Verschraubung bzw. durch entsprechenden Anschraubpunkte, erfolgen.

Von Vorteil kann es sein, wenn der innere Steckverbinderkörper des Steckverbinders zunächst in dem Gehäuse der Elektronikeinheit festgelegt und dann das Gehäuseteil, welches vorzugsweise als Deckel ausgebildet ist, aufgesetzt wird.

Der innere Steckverbinderkörper des Steckverbinders und das mit der Öffnung versehene Gehäuseteil können dabei derart zueinander positioniert sein, dass das Gehäuseteil, insbesondere in einer Ausführung als Deckel, in geeigneter weise auf das Gehäuse aufgesetzt werden kann, so dass der innere Steckverbinderkörper des Steckverbinders von einem Innenraum des Gehäuses durch die Öffnung des Gehäuseteils nach außen übersteht. Anschließend kann der äußere Steckverbinderkörper des Steckverbinders auf die Außenseite des Gehäuseteils derart aufgesetzt werden, so dass der innere Steckverbinderkörper mit Hilfe der Befestigungsmittel mit dem äußeren Steckverbinderkörper verbindbar ist, wodurch das Gehäuseteil, welches sich zwischen den beiden Steckverbinderkörpern befindet, mit festgelegt wird.

Vorzugsweise sind die Befestigungsmittel lösbar ausgebildet.

Vorzugsweise sind die Befestigungsmittel von dem äußeren Steckverbinderkörper des Steckverbinders separat ausgebildet. Bei dem äußeren Steckverbinderkörper selbst handelt es sich somit nicht um ein Befestigungsmittel im Rahmen der Erfindung, insbesondere nicht um eine Überwurfmutter.

Es kann vorgesehen sein, dass die Befestigungsmittel als Schraubverbindungen ausgebildet sind.

In einer Weiterbildung der Erfindung kann ferner vorgesehen sein, dass das Betätigungselement als Betätigungshebel oder Betätigungsschieber ausgebildet ist und/oder dass das Führungsmittel als wenigstens eine Führungsnase ausgebildet ist, insbesondere als Kulissenstein einer zusammen mit dem Betätigungselement gebildeten Kulissenführung.

Insbesondere die Verwendung eines Betätigungshebels hat sich als geeignet herausgestellt. Der Betätigungshebel kann beispielsweise seitlich an dem Gegensteckverbinder angeordnet sein, vorzugsweise beidseitig, und um einen definierten Winkelbereich während der Betätigung von der Grundposition in die Verriegelungsposition schwenkbar sei, beispielsweise um einen Winkelbereich von bis zu 180 Grad, vorzugsweise um einen Winkelbereich von ca. 90 Grad.

Durch das Schließen des Betätigungshebels bzw. durch Betätigung des Betätigungshebels von der Grundposition in die Verriegelungsposition kann über einen geringen Kraftaufwand eine Verpressung der Verzahnung mit der Gegenverzahnung bewirkt werden.

Es kann vorgesehen sein, dass das Betätigungselement in der Verriegelungsposition an einem Gehäuseteil des Gegensteckverbinders anliegt.

Grundsätzlich können auch mehrere Betätigungselemente und/oder mehrere Führungsmittel vorgesehen sein.

Das Betätigungselement kann Ausnehmungen aufweisen, in denen das Führungsmittel des Steckverbinders aufgenommen werden kann. Insbesondere kann der Betätigungshebel oder der Betätigungsschieber als Kulisse einer Kulissenführung ausgebildet sein, in der wenigstens ein Kulissenstein des Steckverbinders zwangsgeführt ist.

Vorzugsweise weist der Steckverbinder zwei Kulissensteine oder Führungsnase auf, die seitlich, insbesondere orthogonal zur Steckrichtung aus dem äußeren Steckverbinderkörper herausragen.

In einer Weiterbildung der Erfindung kann vorgesehen sein, dass das Betätigungselement des Gegensteckverbinders in seiner Grundposition in der Vorraststellung der Steckverbindung mit dem Führungsmittel des Steckverbinders in Eingriff steht.

Beispielsweise kann vorgesehen sein, dass der Betätigungshebel des Gegensteckverbinders zwei Seitenschenkel aufweist, die seitlich an dem Gegensteckverbinder angeordnet und entlang des Rückens des Gegensteckverbinders über einen Steg verbunden sind. Die Seitenschenkel des Betätigungshebels können seitliche Ausnehmungen aufweisen, die in der Vorraststellung der Steckverbindung zwei beidseitig aus dem äußeren Steckverbinderkörper herausragende Führungsnasen aufnehmen.

In einer Weiterbildung der Erfindung kann vorgesehen sein, dass die Verzahnung und/oder die Gegenverzahnung um eine Mittelachse des jeweiligen Steckverbinders herum angeordnet sind.

Eine derartige Anordnung eignet sich besonders, um radiale Kräfte mittels der Verzahnung bzw. Gegenverzahnung aufzunehmen.

In einer Weiterbildung kann vorgesehen sein, dass die Verzahnung und/oder Gegenverzahnung teilringförmig oder ringförmig um die Mittelachse des jeweiligen Steckverbinders angeordnet ist.

Als besonders geeignet hat sich eine teilringförmige Verzahnung bzw. Gegenverzahnung herausgestellt, da dann durch vergleichsweise geringen Aufwand, beispielsweise Material- und Fertigungsaufwand, eine ausreichend vibrationssichere Verzahnung bereitgestellt werden kann.

Im Falle der teilringförmigen Verzahnung kann die Verzahnung und die Gegenverzahnung jeweils zumindest entlang eines Umfangsabschnitts von 10 Grad, vorzugsweise von 30 Grad, besonders bevorzugt von 60 Grad und ganz besonders bevorzugt von 120 Grad, beispielsweise auch 150 Grad, 180 Grad, 210 Grad, 240 Grad, 270 Grad, 300 Grad, 330 Grad bis hin zu 360 Grad, ausgebildet sein.

Erfindungsgemäß ist vorgesehen, dass die Verzahnung und die Gegenverzahnung, wenn diese miteinander in Eingriff stehen, kraftschlüssig in Eingriff stehen, vorzugsweise elastisch ineinander verpresst sind. Optional können die Verzahnung und die Gegenverzahnung außerdem auch formschlüssig miteinander in Eingriff stehen.

Insbesondere ein elastisches Verpressen beim Zusammenstecken der Steckverbindung durch Betätigung des Betätigungselements hat sich als besonders geeignet herausgestellt, um eine hohe Vibrationssicherheit der gesteckten Steckverbindung bereitzustellen. Dadurch, dass zum Verbinden der Steckverbindung ein Betätigungselement verwendet wird, kann von einem Benutzer oder von einer Montagevorrichtung eine ausreichend hohe Kraft, beispielsweise unter Ausnutzung eines physikalischen Hebelarms, zum Verpressen der Verzahnungen eingebracht werden.

In einer Weiterbildung kann ferner vorgesehen sein, dass sich die Zähne der Verzahnung und/oder der Gegenverzahnung nach außen verjüngen, wobei die Zähne der Verzahnung und die Zähne der Gegenverzahnung vorzugsweise eine voneinander abweichende Steigung aufweisen.

Insbesondere, wenn die Zähne der Verzahnung und die Zähne der Gegenverzahnung voneinander abweichende Steigungen aufweisen, lässt sich die Verzahnung in der Verriegelungsstellung der Steckverbindung besonders gut verpressen, bei gleichzeitig einfachem "Einfädeln" der Zähne ineinander. Die Steckverbindung kann in diesem Fall nahezu unabhängig von den Fertigungstoleranzen eine hohe Vibrationssicherheit und Haltekraft aufweisen.

Auf die genaue Ausbildung der Verzahnung bzw. Gegenverzahnung kommt es erfindungsgemäß aber nicht an. Es können nahezu beliebige Geometrien für die Verzahnung und/oder Gegenverzahnung vorgesehen sein.

Es kann vorgesehen sein, dass die Verzahnung und/oder die Gegenverzahnung wenigstens zwei Verzahnungsrippen aufweist, vorzugsweise wenigstens sechs Verzahnungsrippen, besonders bevorzugt wenigstens acht Verzahnungsrippen und ganz besonders bevorzugt wenigstens zehn Verzahnungsrippen.

Es kann vorgesehen sein, dass einer der Steckverbinderkörper des elektrischen Steckverbinders wenigstens zwei, vorzugsweise vier, symmetrisch um eine Mittelachse des Steckverbinders angeordnete Buchsen, vorzugsweise Gewindebuchsen, aufweist, und der korrespondierende Steckverbinderkörper zwei, vorzugsweise vier symmetrisch um die Mittelachse des Steckverbinders angeordnete Durchgangsbohrungen aufweist, wobei die Befestigungsmittel als Verbindungselemente, vorzugsweise als Gewindeschrauben ausgebildet sind, um die Steckverbinderkörper des Steckverbinders miteinander zu verbinden.

Es kann ferner vorgesehen sein, dass die Abschirmung des Steckverbinders einen zylindrischen Abschnitt und mehrere sich an den zylindrischen Abschnitt anschließende Abschirmungslaschen aufweist.

Die Abschirmungslaschen des Steckverbinders können radial vorstehende Kontaktpunkte aufweisen, die derart positioniert sind, dass die Kontaktpunkte das Gehäuseteil im Bereich der Öffnung kontaktieren.

Es kann ferner vorgesehen sein, dass die Abschirmung des Steckverbinders mit dem inneren Steckverbinderkörper des Steckverbinders verbunden ist.

Schließlich kann vorgesehen sein, dass die Kontakteinrichtung des Steckverbinders im inneren Steckverbinderkörper aufgenommen, vorzugsweise mit dem inneren Steckverbinderkörper formschlüssig verbunden und insbesondere verclipst ist.

Weiter kann vorgesehen sein, dass die Kontakteinrichtung des Steckverbinders wenigstens eine, vorzugsweise zwei, vier oder mehr Innenleiterteile aufweist, die vorzugsweise als Pinkontakte und/oder Stiftkontakte ausgebildet sind. Der Gegensteckverbinder kann hierzu korrespondieren ausgebildet sein.

Die Steckverbindung kann sich in besonderer Weise zur Übertragung von elektrischem Strom, z. B. zum Aufladen einer Batterie eignen. Hierzu kann vorgesehen sein, dass die Innenleiterteile des Steckverbinders und Gegensteckverbinders zur Stromversorgung dienen. Es kann vorgesehen sein, dass bei einer Ausgestaltung mit zwei Innenleiterteilen ein Innenleiterteil an dem elektrischen Minuspol bzw. der Masse und das andere Innenleiterteil an einem elektrischen Pluspol der Speisespannung anliegt. Bei einer Ausgestaltung mit vier Innenleiterteilen kann vorzugsweise vorgesehen sein, dass die Innenleiterteile jeweils paarweise derart positioniert sind, dass ein Paar von Innenleiterteilen mit dem elektrischen Minuspol und ein Paar von Innenleiterteilen mit dem elektrischen Pluspol der Speisespannung verbunden sind derart, dass jeweils ein Innenleiterteil eines korrespondierenden Gegensteckverbinders jeweils zwischen ein Paar von Innenleiterteilen des elektrischen Steckverbinders eingeschoben werden kann. Dadurch kann sich eine besonders zuverlässige Übertragung der Ströme ergeben.

Grundsätzlich kann auch vorgesehen sein, dass die Kontakteinrichtung des Steckverbinders zweipolig oder mehrpolig ausgebildet ist bzw. dass die Kontakteinrichtung in mehrere Teilkontakteinrichtungen unterteilt ist.

Die Innenleiterteile der Kontakteinrichtung können vorzugsweise zur Übertragung einer Hochvoltspannung und somit als Hochvoltinnenleiterteile ausgebildet sein. Die zur Übertragung vorgesehen Spannung kann beispielsweise 220 Volt, vorzugsweise 400 Volt, jedoch auch mehr, beispielsweise auch 110 bis 1000 Volt, vorzugsweise 400 bis 1000 Volt betragen.

Die Kontakteinrichtung ist vorzugsweise als Kontakteinrichtung zur Übertragung von Strömen in Elektro- und/oder Hybridfahrzeugen, insbesondere zur Bereitstellung der Antriebsleistung und/oder zum Laden der Batterie, insbesondere einer Hochspannungsbatterie durch Verwendung der Bremsenergie (Rekuperation) oder durch externe Stromquellen vorgesehen.

Von Vorteil kann es sein, wenn die Kontakteinrichtung als Hochvoltkontakteinrichtung und die Innenleiterteile als Hochvoltinnenleiter ausgebildet sind.

Ferner kann vorgesehen sein, dass die Kontakteinrichtung des Steckverbinders einen HV-Interlock zur Überwachung der korrekten Verbindung des Steckverbinders mit dem Gegensteckverbinder aufweist.

Der HV-Interlock ist vorzugsweise ausgebildet, um die korrekte Verbindung des elektrischen Steckverbinders mit dem Gegensteckverbinder in einem Stromkreis, insbesondere einem Hochvoltstromkreis, zu überwachen, mit dem Ziel, eine elektrische Gefährdung durch unbeabsichtigtes, unsachgemäßes oder anderweitig bedingtes Trennen des Stromkreises einer Leistungselektronik, insbesondere einer Hochvoltanlage im Kraftfahrzeugbereich zu unterbinden. Um dies zu erreichen, kann die Leistungselektronik vorzugsweise über eine Sicherheitsschaltung verfügen. Dabei kann es sich um einen Stromkreis handeln, der beispielsweise mit einer 12-Volt Bordspannung beaufschlagt ist und der vom elektrischen Steckverbinder zum elektrischen Gegensteckverbinder verläuft. Wird der Stromkreis der Sicherheitsschaltung durch Abziehen eines der Steckverbinder unterbrochen, so wird dieses von einer Steuereinheit erkannt. Die Steuereinheit kann dann ein Hochvolt-Hauptrelais oder dergleichen öffnen und die Leistungselektronik, insbesondere die Hochvoltanlage, spannungsfrei schalten. Der grundsätzliche Aufbau eines HV-Interlock zur Überwachung der korrekten Steckverbindung ist bekannt.

Es kann ferner vorgesehen sein, dass die Steckverbinderkörper des Steckverbinders eine Positionierungseinrichtung aufweisen derart, dass die Steckverbinderkörper des Steckverbinders nur in einer definierten Orientierung miteinander verbindbar sind.

Weiterhin kann vorgesehen sein, dass der Steckverbinder mit dem Gegensteckverbinder eine Kodiereinrichtung ausbildet derart, dass der Steckverbinder und der Gegensteckverbinder nur in einer definierten Orientierung miteinander verbindbar sind.

In einer Weiterbildung der Erfindung kann vorgesehen sein, dass der Steckverbinder eine teilringförmig ausgebildete Führung aufweist, die ausgebildet ist, um eine Verbindung des Steckverbinders mit dem Gegensteckverbinder zu ermöglichen. Vorzugsweise kann der Gegensteckverbinder einen 45 Grad-Abgang bis 135 Grad-Abgang, besonders bevorzugt einen 90 Grad-Abgang aufweisen.

Insbesondere bei Steckverbindungen, die in der Leistungselektronik im Kraftfahrzeugbereich eingesetzt werden, ist eine zuverlässige und robuste Kontaktierung des elektrischen Steckverbinders mit dem Gegensteckverbinder besonders bedeutsam. Die Ausbildung einer Führung, insbesondere eines Führungsrings an dem elektrischen Steckverbinder hat sich als besonders geeignet herausgestellt, um den elektrischen Gegensteckverbinder zuverlässig anzubinden.

Die Führung kann vorzugsweise am äußeren Steckverbinderkörper des Steckverbinders ausgebildet sein. Insofern der Gegensteckverbinder einen Abgang aufweist, der parallel zur Längsachse des elektrischen Steckverbinders verläuft bzw. der in Steckrichtung verläuft, kann der elektrische Steckverbinder auch eine geschlossene, ringförmig ausgebildete Führung aufweisen.

In einer Weiterbildung kann vorgesehen sein, dass die Verzahnung des Steckverbinders teilringförmig und bezüglich einer Mittelachse des Steckverbinders der teilringförmigen Führung gegenüberliegend angeordnet ist, wobei die Verzahnung vorzugsweise in Richtung des Abgangs des Gegensteckverbinders ausgerichtet ist, wenn die Steckverbindung geschlossen ist.

Hierdurch kann sich eine besonders stabile und vibrationssichere Steckverbindung ergeben.

Es sei darauf hingewiesen, dass Merkmale betreffend den Steckverbinder gleichfalls vorteilhaft für den Gegensteckverbinder umsetzbar sein können. Dies betrifft insbesondere einen zweiteiligen bzw. mehrteiligen Aufbau, die Abschirmung, die Kontakteinrichtung sowie die Ausbildung des Gehäuseteils und des bzw. der Steckverbinderkörper.

Die Erfindung betrifft auch ein Fahrzeug, insbesondere ein Kraftfahrzeug, umfassend eine elektrische Steckverbindung gemäß den vorstehenden Ausführungen, sowie ein Gehäuse einer Hochvoltelektronikeinheit, insbesondere eine Hochspannungsbatterie, mit einem Gehäuseteil, an dem ein Steckverbinder festgelegt ist, und mit einem Gegensteckverbinder zur Verbindung mit dem Steckverbinder.

Erfindungsgemäß kann die elektrische Steckverbindung vorteilhaft zur Übertragung hoher Datenmengen, beispielsweise von verschiedenen optischen Kameras, Sensoren oder Navigationsquellen in Echtzeit verwendbar sein. Mögliche Anwendungsgebiete sind insbesondere autonomes Fahren, Fahrerassistenzsysteme, Navigation, Infotainment, Internet und mobile Kommunikation. Ganz besonders eignet sich die Erfindung allerdings zur Verwendung in der Hochvolttechnologie und insbesondere zur Übertragung von Motor- und/oder Ladeleistung für hybride und elektrische Motoren. Die Erfindung kann sich zur Verwendung mit Spannungen von bis zu 1.000 Volt bei kontinuierlichen Strömen von bis zu 450 Ampere oder mehr eignen.

Die Erfindung betrifft des Weiteren ein Verfahren zum Verriegeln einer aus einem Steckverbinder und einem Gegensteckverbinder bestehenden elektrischen Steckverbindung, wonach die Steckverbindung ausgehend von einer Vorraststellung in eine Verriegelungsstellung gebracht wird, indem ein Betätigungselement des Gegensteckverbinders von einer Grundposition in eine Verriegelungsposition bewegt wird, wobei das Betätigungselement des Gegensteckverbinders mit einem Führungsmittel des Steckverbinders entsprechend zusammenwirkt. Dabei ist vorgesehen, dass eine Verzahnung des Steckverbinders und eine Gegenverzahnung des Gegensteckverbinders für die Verriegelungsstellung miteinander in Eingriff gebracht werden, indem die Verzahnung und die Gegenverzahnung ineinander verpresst werden.

Durch das erfindungsgemäße Verfahren lässt sich die elektrische Steckverbindung besonders einfach schließen und verriegeln. Ferner ergibt sich eine robuste, insbesondere vibrationssichere und zuverlässige Verbindung zwischen dem Steckverbinder und dem Gegensteckverbinder.

Merkmale, die bereits im Zusammenhang mit der erfindungsgemäßen Steckverbindung beschrieben wurden, sind selbstverständlich auch für den Steckverbinder, den Gegensteckverbinder, das Fahrzeug und das erfindungsgemäße Verfahren vorteilhaft umsetzbar - und umgekehrt. Ferner können Vorteile, die bereits im Zusammenhang mit der erfindungsgemäßen elektrischen Steckverbindung genannt wurden, auch auf den Steckverbinder, den Gegensteckverbinder, das Fahrzeug und das erfindungsgemäße Verfahren bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe "ein" oder "das", die auf eine Einzahl von Schritten oder Merkmalen hinweisen, keine Mehrzahl von Merkmalen oder Schritten aus - und umgekehrt.

Nachfolgend wird ein Ausführungsbeispiel der Erfindung anhand der Zeichnung näher beschrieben.

Die Figuren zeigen dabei ein bevorzugtes Ausführungsbeispiel, in dem einzelne Merkmale der vorliegenden Erfindung in Kombination miteinander dargestellt sind. Die Merkmale des Ausführungsbeispiels sind aber auch losgelöst von den anderen Merkmalen des Ausführungsbeispiels umsetzbar und können dementsprechend von einem Fachmann ohne Weiteres zu weiteren sinnvollen Kombinationen und Unterkombinationen verbunden werden.

In den Figuren sind funktionsgleiche Elemente mit denselben Bezugszeichen versehen.

Es zeigen schematisch:
- Figur 1: die elektrische Steckverbindung, umfassend den Steckverbinder und den Gegensteckverbinder in einer perspektivischen Ansicht;
- Figur 2: eine weitere Ausgestaltung des elektrischen Steckverbinders in einer Explosionsdarstellung, mit einem inneren Steckverbinderkörper, einem Gehäuseteil und einem äußeren Steckverbinderkörper;
- Figur 3: einen dem Steckverbinder der Figur 2 korrespondierenden elektrischen Gegensteckverbinder in einer perspektivischen Ansicht;
- Figur 4: einen perspektivischen Ausschnitt einer Verzahnung des Steckverbinders, die mit einer Gegenverzahnung des Gegensteckverbinders verpresst ist;
- Figur 5: den Steckverbinder der Figur 2 und den Gegensteckverbinder der Figur 3 in einer perspektivischen Ansicht in einer Vorraststellung;
- Figur 6: den Steckverbinder der Figur 2 und den Gegensteckverbinder der Figur 3 in einer perspektivischen Ansicht in einer Verriegelungsstellung; und
- Figur 7: eine prinzipmäßige Darstellung eines Hochvoltsystemgehäuses einer Hochvoltelektronikeinheit, insbesondere einer Hochspannungsbatterie und einem Hochvoltleitungssatz, aufweisend einen elektrischen Steckverbinder und ein konfektioniertes Kabel mit einem korrespondierenden Gegensteckverbinder.

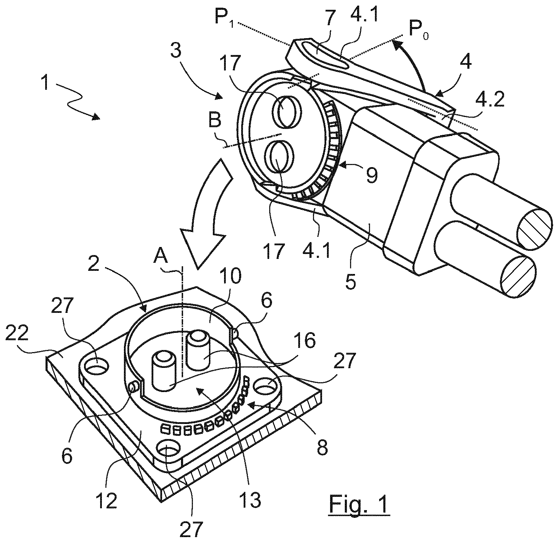

Figur 1 zeigt vereinfacht eine Ausführungsform der elektrischen Steckverbindung 1, umfassend einen Steckverbinder 2 und einen mit dem Steckverbinder 2 verbindbaren Gegensteckverbinder 3. Der Steckverbinder 2 ist im Ausführungsbeispiel als Stiftwanne und der Gegensteckverbinder 3 als Kupplung ausgebildet. Auf die Art des Steckverbinders 2 bzw. Gegensteckverbinders 3 kommt es im Rahmen der Erfindung allerdings nicht an.

In Figur 1 ist zur besseren Darstellung ein Zustand der Steckverbindung 1 gezeigt, in dem Steckverbinder 2 und Gegensteckverbinder 3 mechanisch nicht verbunden sind und sich noch nicht in der Vorraststellung befinden.

Erfindungsgemäß weist der Gegensteckverbinder 3 ein zwischen einer Grundposition Po und einer Verriegelungsposition P₁ bewegliches Betätigungselement 4 auf, das im Ausführungsbeispiel als Betätigungshebel 4 ausgebildet ist. Der Betätigungshebel 4 weist im Ausführungsbeispiel zwei Seitenschenkel 4.1 auf, die über einen Steg 4.2 (nur in Figur 1 erkennbar) miteinander verbunden sind. Grundsätzlich kann das Betätigungselement aber auch hiervon abweichend ausgebildet sein, beispielsweise als Betätigungsschieber.

Der Betätigungshebel 4 befindet sich in dem unverbundenen Zustand der Steckverbindung 1 der Figur 1 platzsparend in seiner Verriegelungsposition P₁ und liegt an dem Gehäuse 5 des Gegensteckverbinders 3 an. Bevor die Steckverbindung 1 mechanisch verbunden wird, ist es somit erforderlich, den Betätigungshebel 4 zunächst in seine Grundstellung Po zu verbringen.

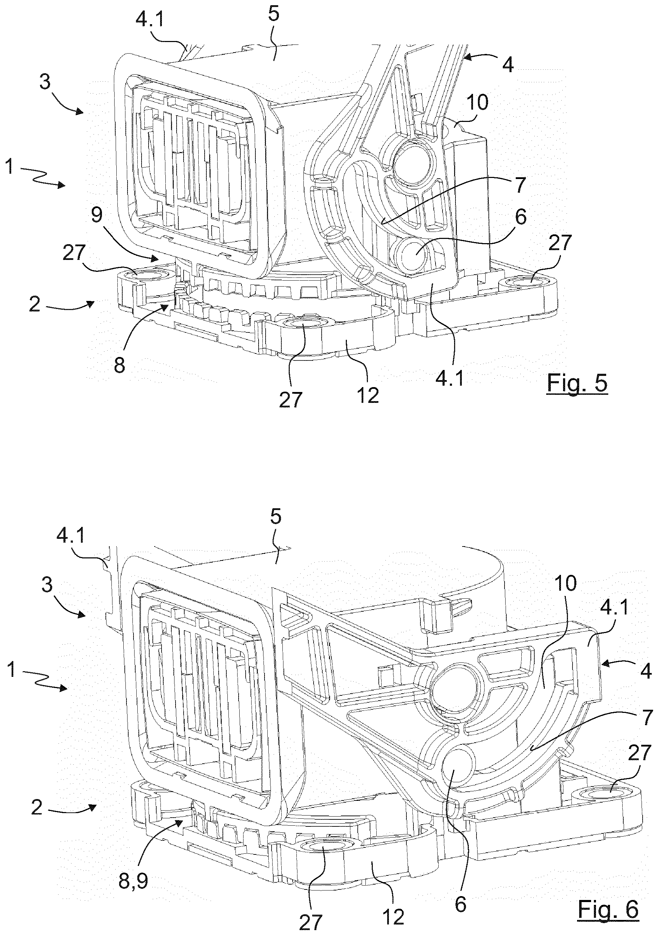

Das Betätigungselement bzw. der Betätigungshebel 4 ist ausgebildet, um mit einem Führungsmittel 6 des Steckverbinders 2 derart zusammenzuwirken, dass die Steckverbindung 1 ausgehend von einer Vorraststellung (vgl. Figur 5) eine Verriegelungsstellung (vgl. Figur 6) einnimmt, wenn das Betätigungselement bzw. der Betätigungshebel 4 von der Grundposition Po in die Verriegelungsposition P₁ bewegt wird. Im Ausführungsbeispiel ist das Führungsmittel 6 als zwei Führungsnasen 6 ausgebildet, die seitlich von dem Steckverbinder 2 abstehen. Zur Aufnahme der Führungsnasen 6 weisen die Seitenschenkel 4.1 des Betätigungshebels 4 jeweils seitliche Ausnehmungen 7 auf. Die Führungsnasen 6 bilden im Ausführungsbeispiel die Kulissensteine einer zusammen mit dem Betätigungshebel 4 resultierenden Kulissenführung aus.

Erfindungsgemäß weist der Steckverbinder 2 eine Verzahnung 8 auf und der Gegensteckverbinder 3 eine mit der Verzahnung 8 des Steckverbinders 2 korrespondierende Gegenverzahnung 9. Die Verzahnung 8 und die Gegenverzahnung 9 stehen in der Verriegelungsstellung (vgl. Figur 6) der Steckverbindung 1 miteinander in Eingriff.

Die Verzahnung 8 und die Gegenverzahnung 9 sind jeweils um eine Mittelachse A, B des entsprechenden Steckverbinders 2, 3 herum angeordnet. Dabei hat es sich als vorteilhaft herausgestellt, die Verzahnung 8 und die Gegenverzahnung 9 jeweils nur teilringförmig um die Mittelachse A, B des jeweiligen Steckverbinders 2, 3 herum anzuordnen, da hierdurch der Aufbau der elektrischen Steckverbindung 1 vereinfacht werden kann, wobei dennoch eine hohe Vibrationssicherheit gewährleistet sein kann. Natürlich ist aber auch eine vollständig ringförmige bzw. geschlossene Anordnung der Verzahnung 8 und/oder der Gegenverzahnung 9 möglich.

Im Ausführungsbeispiel ist ferner eine teilringförmig ausgebildete Führung 10 des Steckverbinders 2 vorgesehen, die ausgebildet ist, um eine Verbindung des Steckverbinders 2 mit dem Gegensteckverbinder 3, der im Ausführungsbeispiel einen 90 Grad-Abgang aufweist, zu ermöglichen. Vorliegend ist die Verzahnung 8 des Steckverbinders 2 der teilringförmigen Führung 10 bezüglich der Mittelachse A des Steckverbinders 2 gegenüberliegend angeordnet und weist in Richtung des Abgangs des Gegensteckverbinders 8, wenn die Steckverbindung 1 geschlossen ist.

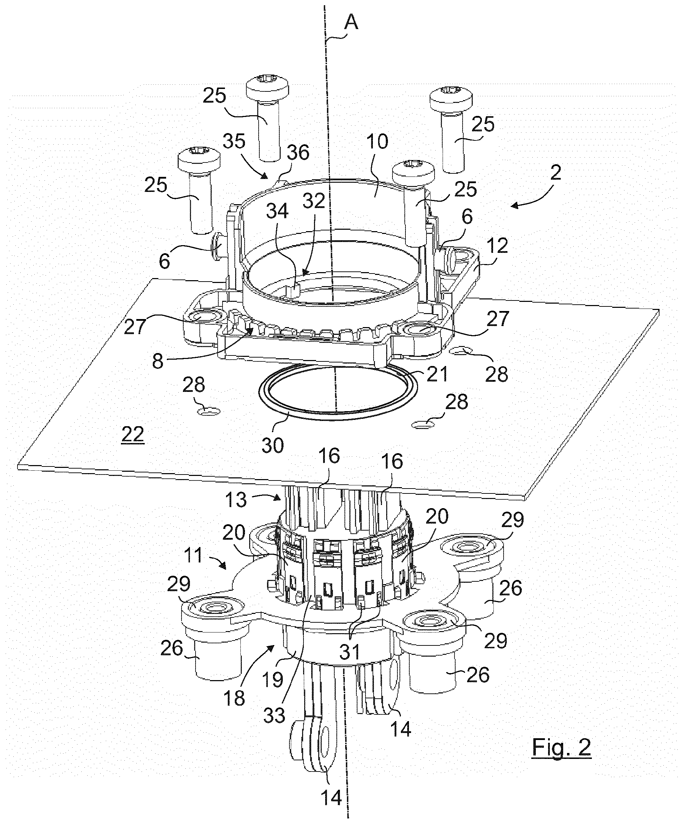

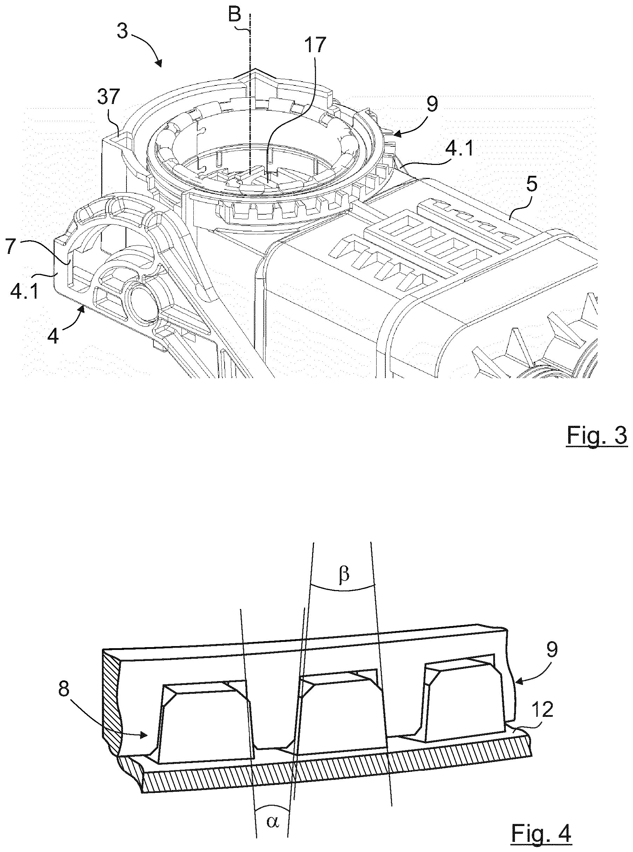

Figur 2 zeigt eine weitere Ausgestaltung eines Steckverbinders 2 in der Ausbildung als Stiftwanne in detaillierterer Darstellung. Der Steckverbinder 2 der Figur 2 eignet sich insbesondere zur Verbindung mit dem in Figur 3 dargestellten weiteren Gegensteckverbinder 3, dessen Merkmale im Wesentlichen denen des Gegensteckverbinders 3 der Figur 1 entsprechen, weshalb auf eine erneute Beschreibung derselben verzichtet wird.

Der elektrische Steckverbinder 2 eignet sich insbesondere zur Verwendung für die Leistungselektronik im Kraftfahrzeug- oder Elektronikbereich.

Die elektrische Steckverbindung 1 ist im Ausführungsbeispiel als Steckverbindung 1 für den Hochvoltbereich, vorzugsweise als Bestandteil eines Hochvoltleitungssatzes und dieser wiederum vorzugsweise als Bestandteil eines Hochvoltsystems, ausgebildet. Das Ausführungsbeispiel ist hierauf jedoch nicht beschränkt zu verstehen.

Der elektrische Steckverbinder 2 weist einen mehrteiligen Steckverbinderkörper auf, der sich im Ausführungsbeispiel aus einem inneren Steckverbinderkörper 11 und einem äußeren Steckverbinderkörper 12 zusammensetzt. Der innere Steckverbinderkörper 11 ist in den Figuren 1, 5 und 6 nicht dargestellt.

Wie aus Figur 2 ersichtlich ist, nimmt der innere Steckverbinderkörper 11 eine Kontakteinrichtung 13 auf. Die Kontakteinrichtung 13 kann in beliebiger Weise mit dem inneren Steckverbinderkörper 11 verbunden sein. Im Ausführungsbeispiel ist vorgesehen, dass die Kontakteinrichtung 13 in den inneren Steckverbinderkörper 11 eingesteckt und dort vorzugsweise formschlüssig, insbesondere eingehakt bzw. eingeclipst ist.

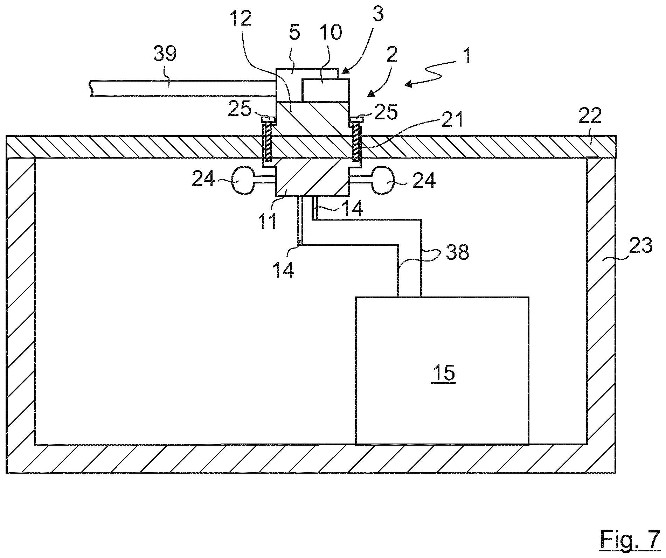

Im Ausführungsbeispiel sind Stromanschlüsse 14 in der Art von Anschlussfahnen vorgesehen, um eine Kontaktierung der Kontakteinrichtung 13, beispielsweise mit einer nachfolgend noch beschriebenen Elektronikeinheit 15 (vgl. Figur 7) vornehmen zu können.

Die Stromanschlüsse 14 sind im Ausführungsbeispiel mit Innenleiterteilen 16 verbunden, die ausgebildet sind, um elektrischen Strom an entsprechend korrespondierend ausgebildete Innenleiterteile 17 (vgl. Figur 1) des Gegensteckverbinders 3 zu übertragen.

Es kann eine beliebige Anzahl Innenleiterteile 16, 17 und beliebige Geometrien der Innenleiterteile 16, 17 vorgesehen sein.

Die Kontakteinrichtung 13 kann ausgebildet sein, um elektrische Ströme und/oder Daten mit beliebigen Frequenzen und/oder Datenraten zu übertragen. Im Ausführungsbeispiel ist vorgesehen, dass die Kontakteinrichtung 13 für den Hochspannungsbereich zur Verwendung mit hohen Spannungen, insbesondere 220 Volt und größer, vorzugsweise 400 bis 1000 Volt, verwendbar ist.

Im Ausführungsbeispiel weist die Kontakteinrichtung 13 einen kreisförmigen Außenumfang auf. Die Form der Kontakteinrichtung 13 kann jedoch beliebig ausgebildet sein, beispielsweise auch quadratisch oder rechteckig. Ein kreisförmiger Außenumfang, insbesondere auch ein konzentrischer bzw. symmetrischer Aufbau der Kontakteinrichtung 13 hat sich jedoch als geeignet herausgestellt.

Die Innenleiterteile 16 der Kontakteinrichtung 13 können (wie in Figur 2 dargestellt) plattenförmig oder auch als Pin- und/oder Stiftkontakte ausgebildet sein (wie in Figur 1 dargestellt). Auch andere Ausgestaltungen sind im Rahmen der Erfindung möglich.

Der innere Steckverbinderkörper 11 weist eine elektromagnetische Abschirmung 18 auf. Insbesondere durch Wechselströme und/oder Schaltvorgänge einer Gleichspannung können elektromagnetische Störsignale generiert werden, die die Elektronik, z. B. in einem Kraftfahrzeug, insbesondere die dortigen elektronischen Steuerungen, wie z. B. eine Motorsteuerung, stören können. Das Ausführungsbeispiel zeigt eine besonders geeignete Ausführung der Abschirmung 18. Die Abschirmung 18 weist einen zylindrischen Abschnitt 19 und mehrere sich an den zylindrischen Abschnitt 19 anschließende Abschirmungslaschen 20 auf. Der Gegensteckverbinder 3 ist vorzugsweise derart gestaltet, dass dieser ebenfalls über eine Abschirmung (nicht dargestellt) verfügt, welche die Abschirmungslaschen 20 wenigstens teilweise radial kontaktiert. Die Abschirmungslaschen 20 sind vorzugsweise federnd ausgebildet, um eine gute Verbindung mit der Abschirmung des Gegensteckverbinders 3 herzustellen.

Die Abschirmung 18 ist im Ausführungsbeispiel mit dem inneren Steckverbinderkörper 11 verbunden. Der innere Steckverbinderkörper 11 und die Abschirmung 18 werden gemeinsam in eine Öffnung 21 eines Gehäuseteils 22 eines Gehäuses 23 eingesteckt.

Das Gehäuse 23 kann eine Elektronikeinheit 15 aufnehmen (vgl. Figur 7). Die Elektronikeinheit 15 ist im Ausführungsbeispiel vorzugsweise als Hochvoltelektronikeinheit, insbesondere als Hochspannungsbatterie 15 ausgebildet.

Eine besonders vorteilhafte Verbindung des inneren Steckverbinderkörpers 11 mit dem Gehäuse 23 bzw. dem Gehäuseteil 22 ergibt sich dadurch, dass der innere Steckverbinderkörper 11 zunächst in dem Gehäuse 23 festgelegt wird. Die Festlegung kann in beliebiger Art und Weise erfolgen. Im Ausführungsbeispiel ist in Figur 7 prinzipmäßig dargestellt, dass der innere Steckverbinderkörper 11 an Anschraubpunkten 24 festgelegt ist. Der innere Steckverbinderkörper 11 kann hierzu entsprechend ausgestaltet sein (nicht näher dargestellt). Von Vorteil ist es, wenn der innere Steckverbinderkörper 11 zunächst in dem Gehäuse 23 festgelegt wird und anschließend das mit der Öffnung 21 versehene Gehäuseteil 22 aufgesetzt bzw. der innere Steckverbinderkörper 11 in die Öffnung 21 eingesteckt wird. Der innere Steckverbinderkörper 11 wird hierzu an einer entsprechend geeigneten Position in dem Gehäuse 235 festgelegt, so dass die Öffnung 21 und die in den inneren Steckverbinderkörper 11 eingesetzte Kontakteinrichtung 13 miteinander konzentrisch fluchten, so dass die Kontakteinrichtung 13 die Öffnung 21 von einem Innenraum des Gehäuses 23 nach außen durchdringen kann.

Im Ausführungsbeispiel ist vorgesehen, dass das Gehäuseteil 22 als Deckel des Gehäuses 23 ausgebildet ist.

Wenn der innere Steckverbinderkörper 11 durch die Öffnung 21 durchgesteckt ist, wird anschließend an einer Außenseite des Gehäuseteils 22 der äußere Steckverbinderkörper 12 angesetzt. Dies ist in der Explosionsdarstellung der Figur 2, dargestellt. Die Festlegung des äußeren Steckverbinderkörpers 12 und des inneren Steckverbinderkörper 11 erfolgt mit Hilfe von Befestigungsmitteln 25 derart, dass auch das Gehäuseteil 22 zwischen den Steckverbinderkörpern 11, 12 festgelegt ist. Im Ausführungsbeispiel sind die Befestigungsmittel als Schraubverbindungen, insbesondere als Gewindeschrauben 25 ausgebildet.

Im Ausführungsbeispiel ist ferner vorgesehen, dass der innere Steckverbinderkörper 11 wenigstens zwei, im Ausführungsbeispiel vier, symmetrisch um eine Mittelachse A des Steckverbinders 2 angeordnete Buchsen 26 aufweist. Die Buchsen sind im Ausführungsbeispiel als Gewindebuchsen 26 ausgebildet. Der äußere Steckverbinderkörper 12 weist korrespondierend wenigstens zwei, im Ausführungsbeispiel vier symmetrisch um die Mittelachse A des Steckverbinders 2 angeordnete Durchgangsbohrungen 27 auf.

Im Ausführungsbeispiel ist vorgesehen, dass das Gehäuseteil 22 Bohrungen 28 aufweist, die mit den Gewindebuchsen 26 bzw. den Durchgangsbohrungen 27 fluchten.

Im Ausführungsbeispiel sind ferner Dichtungen, die als O-Ringe 29 ausgeführt sind, vorgesehen, um die Bohrungen 28 im Gehäuseteil 22 abzudichten. Im Ausführungsbeispiel ist vorgesehen, dass die O-Ringe 29 in die Gewindebuchsen 26 eingelegt werden. Vorzugsweise weisen die Gewindebuchsen 26 hierzu entsprechende Vertiefungen auf.

Zum Abdichten der Öffnung 21 ist analog ebenfalls eine Dichtung 30 vorgesehen. Im Ausführungsbeispiel dient hierzu ein Dichtring 30, der zwischen der Außenseite des Gehäuseteils 22 und dem äußeren Steckverbinderkörper 12 positioniert ist und um die Öffnung 21 umläuft (nur in Figur 2 dargestellt).

Wie sich der Figur 2 entnehmen lässt, weisen die Abschirmungslaschen 20 und/oder alternativ (jedoch nicht dargestellt) der zylindrische Abschnitt 19 der Abschirmung 18 Kontaktpunkte 31 auf, die derart positioniert sind, dass die Kontaktpunkte 31 das Gehäuseteil 22 im Bereich der Öffnung 21 kontaktieren. Vorzugsweise ragen die Kontaktpunkte 31 hierzu radial über die Abschirmungslaschen 20 hinaus. Durch die Kontaktpunkte 31 wird eine zuverlässige elektrische Verbindung zwischen der Abschirmung 18 und dem Gehäuseteil 22, welches vorzugsweise elektrisch leitend, insbesondere als Blechteil oder auch als Gussteil, ausgebildet ist, hergestellt.

Wie sich der Figur 2 entnehmen lässt, weisen die Steckverbinderkörper 11, 12 eine Positionierungseinrichtung 32 auf derart, dass die Steckverbinderkörper 11, 12 nur in einer definierten Orientierung miteinander verbindbar sind. Im Ausführungsbeispiel ist vorgesehen, dass die Positionierungseinrichtung 32 wenigstens eine, im Ausführungsbeispiel mehrere, vorzugsweise drei bis vier Positionierungsnuten 33 und damit korrespondierende Positionierungsnasen 34 aufweist.

Im Ausführungsbeispiel sind die Positionierungsnuten 33 am inneren Steckverbinderkörper 11 ausgebildet und verlaufen in Axialrichtung zwischen zwei Abschirmungslaschen 20. Der äußere Steckverbinderkörper 12 weist hierzu korrespondierende Positionierungsnasen 34 auf, die, wenn der äußere Steckverbinderkörper 12 korrekt an den inneren Steckverbinderkörper 11 angesetzt ist, in Axialrichtung A verlaufend in die entsprechenden Positionierungsnuten 33 eingeschoben werden. Im Ausführungsbeispiel ist vorgesehen, dass die Steckverbinderkörper 11, 12 nur in genau einer Orientierung miteinander verbindbar sind.

Im Ausführungsbeispiel ist vorgesehen, dass der elektrische Steckverbinder 2 mit dem elektrischen Gegensteckverbinder 3 eine Codiereinrichtung 35 (vgl. Figur 2) ausbildet derart, dass der Steckverbinder 2 und der Gegensteckverbinder 3 nur in einer definierten Orientierung miteinander verbindbar sind. Im Ausführungsbeispiel ist vorgesehen, dass der elektrische Steckverbinder 2 und der elektrische Gegensteckverbinder 3 nur in genau einer Orientierung miteinander verbindbar sind.

Ein dem äußeren Steckverbinderkörper 12 zugeordnetes Codierelement 36 der Codiereinrichtung 35 ist in Figur 2 und ein korrespondierendes Gegencodierelement 37 zur Aufnahme des Codierelements 36 ist in Figur 3 dargestellt. Derartige mechanische Codierungen, um elektrische Steckverbinder 2 und elektrische Gegensteckverbinder 3 miteinander zu verbinden, sind aus dem Stand der Technik grundsätzlich bekannt.

In Figur 4 sind Verzahnung 8 und Gegenverzahnung 9 dargestellt, während diese in der Verriegelungsstellung der Steckverbindung 1 miteinander in Eingriff stehen. Dabei kann vorgesehen sei, wie im Ausführungsbeispiel dargestellt, dass die Verzahnung 8 und die Gegenverzahnung 9 formschlüssig und kraftschlüssig in Eingriff stehen, vorzugsweise elastisch ineinander verpresst sind. Hierzu kann es von Vorteil sein, wenn sich die Zähne der Verzahnung 8 und die Zähne der Gegenverzahnung 9 nach außen hin verjüngen, wobei die Zähne der Verzahnung 8 und die Zähne der Gegenverzahnung 9 vorzugsweise eine voneinander abweichende Steigung (unterschiedliche Winkel α und β) aufweisen, was eine Verpressen vorteilhaft ermöglichen kann.

Für ein besseres Einführen der Verzahnung 8 in die Gegenverzahnung 9 können die einzelnen Zähne der Verzahnung 8 und/oder der Gegenverzahnung 9 Abschrägungen bzw. Fasen aufweisen, wie in Figur 4 dargestellt.

Die Figur 5 zeigt die elektrische Steckverbindung 1 in einer perspektivischen, teilgeschnittenen Ansicht in Vorraststellung. In Figur 6 ist die elektrische Steckverbindung 1 in Verriegelungsstellung dargestellt. Es ist erkennbar, dass das Betätigungselement bzw. der Betätigungshebel 4 des Gegensteckverbinders 3 in seiner Grundposition Po in der Vorraststellung der Steckverbindung 1 mit dem Führungsmittel bzw. mit den beiden Führungsnasen 6 des Steckverbinders 2 in Eingriff steht. Bei einer Betätigung des Betätigungshebels 4 von der Grundposition Po in die Verriegelungsposition P₁ kann die elektrische Steckverbindung 1 durch die dadurch bereitgestellte Zwangs- bzw. Kulissenführung verlässlich und einfach geschlossen werden. Aufgrund des physikalischen Hebelarms kann bereits mit vergleichsweise geringem Kraftaufwand eine starke Verpressung der Verzahnung 8 in der Gegenverzahnung 9 ermöglicht werden.

Die Erfindung betrifft auch ein Fahrzeug, insbesondere ein Kraftfahrzeug, umfassend eine elektrische Steckverbindung 1 gemäß den vorstehenden Ausführungen. Dabei kann insbesondere, wie in Figur 7 dargestellt, ein Gehäuse 23 einer Hochvolteinheit, insbesondere einer Hochspannungsbatterie, mit einem Gehäuseteil 22, an dem der Steckverbinder 2 festgelegt ist, und mit einem Gegensteckverbinder 3 zur Verbindung mit dem Steckverbinder 2 vorgesehen sein.

Figur 7 zeigt einen prinzipmäßigen Aufbau eines Hochvoltsystems mit dem elektrischen Steckverbinder 2 und dem elektrischen Gegensteckverbinder 3. Dargestellt ist auch das Gehäuse 23, welches die Elektronikeinheit 15, bei der es sich vorzugsweise um eine Hochvoltelektronikeinheit, insbesondere eine Hochspannungsbatterie 15 handelt, aufnimmt. Die Hochspannungsbatterie 15 ist über Leitungen 38 mit den Stromanschlüssen 14 des elektrischen Steckverbinders 2 verbunden. Bei dem Gehäuseteil 22 handelt es sich dabei vorzugsweise um einen Deckel des Gehäuses 23. Der elektrische Gegensteckverbinder 3 ist in Figur 7 als Teil eines konfektionierten Kabels 39 dargestellt, d. h. das konfektionierte Kabel 39 weist den elektrischen Gegensteckverbinder 3 auf.

## Patentansprüche

1. Elektrische Steckverbindung (1), umfassend einen Steckverbinder (2) und einen mit dem Steckverbinder (2) verbindbaren Gegensteckverbinder (3), wobei der Gegensteckverbinder (3) ein zwischen einer Grundposition (P₀) und einer Verriegelungsposition (P₁) bewegliches Betätigungselement (4) aufweist, das ausgebildet ist, um mit einem Führungsmittel (6) des Steckverbinders (2) derart zusammenzuwirken, dass die Steckverbindung (1) ausgehend von einer Vorraststellung eine Verriegelungsstellung einnimmt, wenn das Betätigungselement (4) von der Grundposition (P₀) in die Verriegelungsposition (P₁) bewegt wird, wobei der Steckverbinder (2) eine Verzahnung (8) aufweist und der Gegensteckverbinder (3) eine mit der Verzahnung (8) des Steckverbinders (2) korrespondierende Gegenverzahnung (9) aufweist, wobei die Verzahnung (8) und die Gegenverzahnung (9) in der Verriegelungsstellung der Steckverbindung (1) miteinander in Eingriff stehen, **dadurch gekennzeichnet, dass**
die Zähne der Verzahnungen (8, 9) in Steckrichtung axial ineinander geschoben werden, während das Betätigungselement (4) von der Grundposition (P₀ in die Verriegelungsposition (P₁) bewegt wird.

2. Steckverbindung (1) nach Anspruch 1,
**dadurch gekennzeichnet, dass**
der Steckverbinder (2) als Gerätesteckverbinder oder Stiftwanne und/oder der Gegensteckverbinder (3) als Kupplung oder Stecker ausgebildet ist.

3. Steckverbindung (1) nach Anspruch 1 oder 2,
**dadurch gekennzeichnet, dass**
der Steckverbinder (2) einen Steckverbinderkörper zur Aufnahme einer Kontakteinrichtung (13) und eine Abschirmung (18) aufweist, wobei der Steckverbinderkörper zum Einsetzen in eine Öffnung (21) eines Gehäuseteils (22) eines Gehäuses (23) einer Elektronikeinheit (15) ausgebildet ist, und wobei der Steckverbinderkörper mehrteilig ausgebildet ist und wenigstens einen inneren Steckverbinderkörper (11) und einen äußeren Steckverbinderkörper (12) aufweist, die auf gegenüberliegenden Seiten des Gehäuseteils (22) positioniert sind, wobei der innere Steckverbinderkörper (11) unabhängig von dem Gehäuseteil (22) im Gehäuse (23) der Elektronikeinheit (15) festlegbar ist und wobei Befestigungsmittel (25) vorgesehen sind, um die Steckverbinderkörper (11, 12) derart miteinander zu verbinden, dass das Gehäuseteil (22) zwischen den Steckverbinderkörpern (11, 12) festgelegt ist.

4. Steckverbindung (1) nach einem der Ansprüche 1 bis 3,
**dadurch gekennzeichnet, dass**
das Betätigungselement (4) als Betätigungshebel oder Betätigungsschieber ausgebildet ist und/oder dass das Führungsmittel (6) als wenigstens eine Führungsnase ausgebildet ist, insbesondere als Kulissenstein einer zusammen mit dem Betätigungselement gebildeten Kulissenführung.

5. Steckverbindung (1) nach einem der Ansprüche 1 bis 4,
**dadurch gekennzeichnet, dass**
das Betätigungselement (4) des Gegensteckverbinders (3) in seiner Grundposition (P₀) in der Vorraststellung der Steckverbindung (1) mit dem Führungsmittel (6) des Steckverbinders (2) in Eingriff steht.

6. Steckverbindung (1) nach einem der Ansprüche 1 bis 5,
**dadurch gekennzeichnet, dass**
die Verzahnung (8) und/oder die Gegenverzahnung (9) um eine Mittelachse (A, B) des jeweiligen Steckverbinders (2, 3) herum angeordnet sind.

7. Steckverbindung (1) nach Anspruch 6,
**dadurch gekennzeichnet, dass**
die Verzahnung (8) und/oder die Gegenverzahnung (9) teilringförmig oder ringförmig um die Mittelachse (A, B) des jeweiligen Steckverbinders (2, 3) angeordnet ist.

8. Steckverbindung (1) nach einem der Ansprüche 1 bis 7,
**dadurch gekennzeichnet, dass**
die Verzahnung (8) und die Gegenverzahnung (9), wenn diese miteinander in Eingriff stehen, formschlüssig und/oder kraftschlüssig in Eingriff stehen, vorzugsweise elastisch ineinander verpresst sind.

9. Steckverbindung (1) nach einem der Ansprüche 1 bis 8,
**dadurch gekennzeichnet, dass**
sich die Zähne der Verzahnung (8) und/oder der Gegenverzahnung (9) nach außen verjüngen, wobei die Zähne der Verzahnung (8) und die Zähne der Gegenverzahnung (9) vorzugsweise eine voneinander abweichende Steigung aufweisen.

10. Steckverbindung (1) nach einem der Ansprüche 1 bis 9,
**dadurch gekennzeichnet, dass**
der Steckverbinder (2) eine teilringförmig ausgebildete Führung (10) aufweist, die ausgebildet ist, um eine Verbindung des Steckverbinders (2) mit dem Gegensteckverbinder (3), der einen 45 Grad-Abgang bis 135 Grad-Abgang, vorzugsweise einen 90 Grad-Abgang aufweist, zu ermöglichen.

11. Steckverbindung (1) nach Anspruch 10,
**dadurch gekennzeichnet, dass**
die Verzahnung (8) des Steckverbinders (2) teilringförmig und bezüglich einer Mittelachse (A) des Steckverbinders (2) der teilringförmigen Führung (10) gegenüberliegend angeordnet ist, wobei die Verzahnung (8) vorzugsweise in Richtung des Abgangs des Gegensteckverbinders (3) ausgerichtet ist, wenn die Steckverbindung (1) geschlossen ist.

12. Fahrzeug, insbesondere Kraftfahrzeug, umfassend eine elektrische Steckverbindung (1) gemäß einem der Ansprüche 1 bis 11, sowie ein Gehäuse (23) einer Hochvoltelektronikeinheit, insbesondere einer Hochspannungsbatterie (15), mit einem Gehäuseteil (22), an dem ein Steckverbinder (2) festgelegt ist und mit einem Gegensteckverbinder (3) zur Verbindung mit dem Steckverbinder (2).

13. Verfahren zum Verriegeln einer aus einem Steckverbinder (2) und einem Gegensteckverbinder (3) bestehenden elektrischen Steckverbindung (1), wonach die Steckverbindung (1) ausgehend von einer Vorraststellung in eine Verriegelungsstellung gebracht wird, indem ein Betätigungselement (4) des Gegensteckverbinders (3) von einer Grundposition (P₀) in eine Verriegelungsposition (P₁) bewegt wird, wobei das Betätigungselement (4) des Gegensteckverbinders (3) mit einem Führungsmittel (6) des Steckverbinders (2) entsprechend zusammenwirkt, wobei eine Verzahnung (8) des Steckverbinders (2) und eine Gegenverzahnung (9) des Gegensteckverbinders (3) für die Verriegelungsstellung miteinander in Eingriff gebracht werden, indem die Verzahnung (8) und die Gegenverzahnung (9) ineinander verpresst werden,
**dadurch gekennzeichnet, dass**
die Zähne der Verzahnungen (8, 9) in Steckrichtung axial ineinander geschoben werden, während das Betätigungselement (4) von der Grundposition (P0) in die Verriegelungsposition (P1) bewegt wird.

## Claims

1. An electrical plug-in connection (1), comprising a plug-in connector (2) and a mating plug-in connector (3) which can be connected to the plug-in connector (2), wherein the mating plug-in connector (3) has an operating element (4) which is movable between a home position (P₀) and a locking position (P₁) and is designed to interact with a guide means (6) of the plug-in connector (2) in such a way that the plug-in connection (1), starting from a preliminary latching position, assumes a locking position when the operating element (4) is moved from the home position (P₀) to the locking position (P₁), wherein the plug-in connector (2) has a tooth system (8) and the mating plug-in connector (3) has a mating tooth system (9) which corresponds to the tooth system (8) of the plug-in connector (2), wherein the tooth system (8) and the mating tooth system (9) are in engagement with one another in the locking position of the plug-in connection (1),
**characterized in that**
the teeth of the tooth systems (8,9) are pushed axially one into the other in the plug-in direction while the operating element (4) is moved from the home position (P₀) into the locking position (P₁).

2. The plug-in connection (1) as claimed in claim 1,
**characterized in that**
the plug-in connector (2) is designed as a device plug-in connector or pin header and/or the mating plug-in connector (3) is designed as a coupling or plug.

3. The plug-in connection (1) as claimed in claim 1 or 2,
**characterized in that**
the plug-in connector (2) has a plug-in connector body for receiving a contact device (13) and has a shielding (18), wherein the plug-in connector body is designed for insertion into an opening (21) of a housing part (22) of a housing (23) of an electronics unit (15), and wherein the plug-in connector body is of multi-part design and has at least one inner plug-in connector body (11) and one outer plug-in connector body (12) which are positioned on opposite sides of the housing part (22), wherein the inner plug-in connector body (11) can be secured in the housing (23) of the electronics unit (15) independently of the housing part (22), and wherein fastening means (25) are provided in order to connect the plug-in connector bodies (11, 12) to one another in such a way that the housing part (22) is secured between the plug-in connector bodies (11, 12).

4. The plug-in connection (1) as claimed in one of claims 1 to 3,
**characterized in that**
the operating element (4) is designed as an operating lever or operating slide and/or **in that** the guide means (6) is designed as at least one guide lug, in particular as a sliding block of a slotted guide which is formed together with the operating element.

5. The plug-in connection (1) as claimed in one of claims 1 to 4,
**characterized in that**
the operating element (4) of the mating plug-in connector (3), in its home position (P₀) in the preliminary latching position of the plug-in connection (1), is in engagement with the guide means (6) of the plug-in connector (2).

6. The plug-in connection (1) as claimed in one of claims 1 to 5,
**characterized in that**
the tooth system (8) and/or the mating tooth system (9) are arranged around a center axis (A, B) of the respective plug-in connector (2, 3).

7. The plug-in connection (1) as claimed in claim 6,
**characterized in that**
the tooth system (8) and/or the mating tooth system (9) are/is arranged in the form of part of a ring or in the form of a ring around the center axis (A, B) of the respective plug-in connector (2, 3).

8. The plug-in connection (1) as claimed in one of claims 1 to 7,
**characterized in that**
the tooth system (8) and the mating tooth system (9), when they are in engagement with one another, are in engagement in an interlocking manner and/or in a force-fitting manner, preferably pressed together elastically one into the other.

9. The plug-in connection (1) as claimed in one of claims 1 to 8,
**characterized in that**
the teeth of the tooth system (8) and/or of the mating tooth system (9) taper to the outside, wherein the teeth of the tooth system (8) and the teeth of the mating tooth system (9) preferably have a different pitch from one another.

10. The plug-in connection (1) as claimed in one of claims 1 to 9,
**characterized in that**
the plug-in connector (2) has a guide (10) which is designed in the form of part of a ring and is designed to allow connection of the plug-in connector (2) to the mating plug-in connector (3) which has a 45-degree outlet to 135-degree outlet, preferably a 90-degree outlet.

11. The plug-in connection (1) as claimed in claim 10,
**characterized in that**
the tooth system (8) of the plug-in connector (2) is arranged in the form of part of a ring and opposite the guide (10) which is in the form of part of a ring with respect to a center axis (A) of the plug-in connector (2), wherein the tooth system (8) is preferably oriented in the direction of the outlet of the mating plug-in connector (3) when the plug-in connection (1) is closed.

12. A vehicle, in particular a motor vehicle, comprising an electrical plug-in connection (1) as claimed in one of claims 1 to 11 and a housing (23) of a high-voltage electronics unit, in particular of a high-voltage battery (15), having a housing part (22) to which a plug-in connector (2) is secured and having a mating plug-in connector (3) for connection to the plug-in connector (2).

13. A method for locking an electrical plug-in connection (1) consisting of a plug-in connector (2) and a mating plug-in connector (3), according to which method the plug-in connection (1), starting from a preliminary latching position, is moved to a locking position by way of an operating element (4) of the mating plug-in connector (3) being moved from a home position (P₀) to a locking position (Pi), wherein the operating element (4) of the mating plug-in connector (3) accordingly interacts with a guide means (6) of the plug-in connector (2), wherein a tooth system (8) of the plug-in connector (2) and a mating tooth system (9) of the mating plug-in connector (3) are brought into engagement with one another for the locking position by way of the tooth system (8) and the mating tooth system (9) being pressed together one into the other,
**characterized in that**
the teeth of the tooth systems (8,9) are pushed axially one into the other in the plug-in direction while the operating element (4) is moved from the home position (P₀) into the locking position (P₁).

## Revendications

1. Connexion électrique par insertion (1) comprenant un connecteur par insertion (2) et un connecteur par insertion homologue (3) pouvant être relié au connecteur par insertion (2), dans laquelle le connecteur par insertion homologue (3) comporte un élément d'actionnement (4) mobile entre une position de base (P₀) et une position de verrouillage (P₁) qui est conçu pour interagir avec un moyen de guidage (6) du connecteur par insertion (2) de telle sorte que la connexion électrique par insertion (1) passe d'une position de pré-encliquetage à une position de verrouillage quand l'élément d'actionnement (4) est déplacé de la position de base (P₀) à la position de verrouillage (P₁), dans laquelle le connecteur par insertion (2) comporte une denture (8) et le connecteur par insertion homologue (3) une denture homologue (9) correspondant à la denture (8) du connecteur par insertion (2), et dans laquelle la denture (8) et la denture homologue (9) sont en prise l'une avec l'autre dans la position de verrouillage de la connexion par insertion (1),
**caractérisée en ce que**
les dents des dentures (8, 9) s'emboîtent axialement les unes dans les autres dans la direction d'insertion pendant que l'élément d'actionnement (4) est déplacé de la position de base (P₀) à la position de verrouillage (P₁).

2. Connexion par insertion (1) selon la revendication 1,
**caractérisée en ce que**
le connecteur par insertion (2) est conçu comme un connecteur par insertion d'appareil ou une embase et/ou le connecteur par insertion homologue (3) comme un accouplement ou une fiche.

3. Connexion par insertion (1) selon la revendication 1 ou 2,
**caractérisée en ce que**
le connecteur par insertion (2) comporte un corps de connecteur par insertion pour recevoir un dispositif de contact (13) et un blindage (18), le corps de connecteur par insertion étant conçu pour s'insérer dans une ouverture (21) d'une partie de boîtier (22) d'un boîtier (23) d'un module électronique (15) et le corps de connecteur par insertion étant constitué de plusieurs pièces et comportant au moins un corps des connecteur par insertion intérieur (11) et un corps de connecteur par insertion extérieur (12) qui sont agencés sur des côtés opposés de la partie de boîtier (22), le corps de connecteur par insertion intérieur (11) pouvant être fixé indépendamment de la partie de boîtier (22) dans le boîtier (23) du module électronique (15) et des moyens de fixation (25) étant prévus pour relier les corps de connecteur par insertion (11, 12) entre eux de sorte que la partie de boîtier (22) est fixée entre les corps de connecteur par insertion (11, 12).

4. Connexion par insertion (1) selon une des revendications 1 à 3,
**caractérisée en ce que**
l'élément d'actionnement (4) est configuré comme un levier d'actionnement ou un coulisseau d'actionnement et/ou que le moyen de guidage (6) est configuré comme au moins une came de guidage, en particulier comme un bloc coulissant d'un guide coulissant formé avec l'élément d'actionnement.

5. Connexion par insertion (1) selon une des revendications 1 à 4,
**caractérisée en ce que**,
dans sa position de base (P₀), l'élément d'actionnement (4) du connecteur par insertion homologue (3) est en prise avec le moyen de guidage (6) du connecteur par insertion (2) dans la position de pré-encliquetage de la connexion par insertion (1).

6. Connexion par insertion (1) selon une des revendications 1 à 5,
**caractérisée en ce que**
la denture (8) et/ou la denture homologue (9) sont disposées autour d'un axe central (A, B) de leur connecteur par insertion (2, 3) respectif.

7. Connexion par insertion (1) selon la revendication 6,
**caractérisée en ce que**
la denture (8) et/ou la denture homologue (9) sont disposées en arc de cercle ou en cercle autour de l'axe central (A, B) de leur connecteur par insertion (2, 3) respectif.

8. Connexion par insertion (1) selon une des revendications 1 à 7,
**caractérisée en ce que**,
quand elles sont en prise l'une avec l'autre, la denture (8) et/ou la denture homologue (9) sont en prise par complémentarité de formes et/ou mécaniquement, de préférence sont pressées l'une dans l'autre de façon élastique.

9. Connexion par insertion (1) selon une des revendications 1 à 8,
**caractérisée en ce que**
les dents de la denture (8) et/ou de la denture homologue (9) s'effilent vers l'extérieur, les dents de la denture (8) et les dents de la denture homologue (9) présentant de préférence une inclinaison différente l'une de l'autre.

10. Connexion par insertion (1) selon une des revendications 1 à 9,
**caractérisée en ce que**
le connecteur par insertion (2) comporte un guide (10) en forme d'arc de cercle qui est conçu pour permettre une connexion du connecteur par insertion (2) avec le connecteur par insertion homologue (3) qui présente une sortie de 45 degrés à 135 degrés, de préférence une sortie à 90 degrés.

11. Connexion par insertion (1) selon la revendication 10,
**caractérisée en ce que**
la denture (8) du connecteur par insertion (2) est en forme d'arc de cercle et disposée à l'opposé du guide (10) en forme d'arc de cercle par rapport à un axe central (A) du connecteur par insertion (2), la denture (8) étant de préférence orientée dans la direction de la sortie du connecteur par insertion homologue (3) quand la connexion par insertion (1) est fermée.

12. Véhicule, de préférence véhicule automobile, comprenant une connexion électrique par insertion (1) selon une des revendications 1 à 11, ainsi qu'un boîtier (23) d'un module électronique à haute tension, en particulier d'une batterie à haute tension (15), avec une partie de boîtier (22) à laquelle un connecteur par insertion (2) est fixé et avec un connecteur par insertion homologue (3) pour la connexion avec le connecteur par insertion (2).

13. Procédé de verrouillage d'une connexion par insertion (1) constituée d'un connecteur par insertion (2) et d'un connecteur par insertion homologue (3), selon lequel la connexion par insertion (1) est mise à partir d'une position de pré-encliquetage dans une position de verrouillage en déplaçant un élément d'actionnement (4) du connecteur par insertion homologue (3) d'une position de base (P₀) à une position de verrouillage (P₁), l'élément d'actionnement (4) du connecteur par insertion homologue (3) interagissant de façon appropriée avec un moyen de guidage (6) du connecteur par insertion (2), et une denture (8) du connecteur par insertion (2) et une denture homologue (9) du connecteur par insertion homologue (3) étant mises en prise l'une avec l'autre pour la position de verrouillage en pressant la denture (8) et la denture homologue (9) l'une dans l'autre, **caractérisé en ce que**
les dents des dentures (8, 9) s'emboîtent axialement les unes dans les autres dans la direction d'insertion pendant que l'élément d'actionnement (4) est déplacé de la position de base (P₀) à la position de verrouillage (P₁).
